(19) Europäisches Patentamt / European Patent Office / Office européen des brevets

(11) **EP 4 741 786 A1**

(12) **EUROPEAN PATENT APPLICATION**

(43) Date of publication:
**13.05.2026 Bulletin 2026/20**

(21) Application number: **24383222.7**

(22) Date of filing: **08.11.2024**

(51) International Patent Classification (IPC):
**G01K 11/32** $^{(2021.01)}$    **G01D 5/353** $^{(2006.01)}$

(52) Cooperative Patent Classification (CPC):
**G01K 11/32; G01D 5/35367; H04B 10/071;**
**H04B 10/272**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(72) Inventors:
• **VIDAL RODRIGUEZ, Borja**
  **46022 Valencia (ES)**
• **MONTALVO GARCÍA, Julio**
  **28050 Madrid (ES)**
• **CORTES OLMEDA, Daniel**
  **28050 Madrid (ES)**

(74) Representative: **Herrero & Asociados, S.L.**
  **Edificio Aqua - Calle Agustín de Foxá, 4-10, 2ºA**
  **28036 Madrid (ES)**

(71) Applicants:
• **Telefonica, S.A.**
  **28013 Madrid (ES)**
• **UNIVERSIDAD POLITECNICA DE VALENCIA**
  **46022 Valencia (ES)**

(54) **METHOD, DEVICE AND SYSTEM FOR MONITORING TEMPERATURE IN FIBER OPTIC NETWORKS**

(57)    Method, system and device for monitoring temperature in a fiber optic network, including an OLT(110) and customer devices (121,122) connected through a link (100), using existing protocols and without additional hardware, as the OLT (110) performs: measuring the round-trip delay (RTD) between each customer device (121) requiring synchronization with the customer devices (122) previously set in service and connected to the link (100) at scheduled intervals, and estimating variations in RTD to determine temperature changes ($\Delta$T) in the link (100). Additionally, the method allows generating temperature maps by calculating the variation in average temperature along the link by dividing it into segments and calculating the average temperature variation iteratively, starting from the initial segment between the OLT (110) and the closest customer device and progressing through subsequent segments. This calculation provides points of temperature along the fiber tree and the information of several trees can be represented together to build a 2D map.

**FIG. 1**

**Description**

**TECHNICAL FIELD**

The present invention is applied to the technical sector of fiber optic telecommunications and, in particular, shows a technical solution for monitoring the environmental temperature in any passive optical network (PON).

**BACKGROUND OF THE INVENTION**

FTTx (Fiber to the x) networks are known for their high bandwidth capabilities, reliability, and ability to support a wide range of digital services, including internet, television, and telephony. The "x" in FTTx denotes the specific endpoint where the fiber optic cable terminates. For example, FTTH (Fiber to the Home) means the fiber runs directly to individual homes, providing high-speed internet directly to residential customers. FTTB (Fiber to the Building) refers to fiber terminating at a multi-dwelling unit or business building, with the final connection to individual units or offices typically being made via copper or wireless technology.

The three main parts of a FTTx-PON system are:

- Optical Line Termination (OLT): This is equipment installed in the network operator premises.
- Optical Network Unit (ONU). This is the customer premises equipment (CPE) which performs as an optical modem, transforming the optical signals received from the PON into electrical signals towards the customer premises, typically Ethernet and Wi-Fi signals.
- PON infrastructure: This is the passive optical infrastructure consisting of different optical fiber cables and fiber splitters connecting OLTs and ONUs.

Each OLT optical interface is connected to several ONUs through the PON infrastructure, with typically uses optical splitters in cascade, forming a tree physical topology.

Existing solutions to monitor temperature on optical fibers use dedicated measurement equipment (such as OTDR - Optical Time Domain Reflectometer-, or OFDR - Optical Frequency Domain Reflectometry-) with dedicated optical signals for monitoring purposes, and can only measure at a single fiber at a time, requiring optical switching if a big amount of measurement fibers are in scope, thus increasing the total cost of the solution and increasing the measurement time. The solutions are generally based on Raman or Rayleigh backscattering effects in optical fiber.

For example, US8858069B2 discloses a fiber optic temperature distribution measurement device that measures the temperature distribution along an optical fiber using backward Raman scattering light generated in the optical fiber. Another example is disclosed in US11644369B2, which describes a technique for monitoring fiber optics by distributed temperature sensing (DTS) coupled to an OLT, the DTS employing Raman-based optical time domain reflectometry (OTDR) to determine installation problems/errors and/or optical fiber differences occurring over the length of the optical fiber cable and the determination.

These solutions introduce optical losses when used in fibers also transmitting data signals.

For PON networks, in the state of the art it is found a technique that rely only on the "Equalization delay" parameter of the Physical Layer Operation Administration and Maintenance (PLOAM) layer; see "Towards Costless Temperature Monitoring through PLOAM Information in TDMA PON Networks" by Cristian Salgado-Cazorla and Borja Vidal, Optical Fiber Communications Conference and Exhibition (OFC) 2023, 5-9 March 2023. Nevertheless, the measurement method does not take into account all the delays involved in the PON protocol (ex: random delays, pre-assigned delays...), thus the "equalization delay" parameter is not generalizable to measure temperature variations in the environment around an optical fiber in all the operational cases, such as a device reboot or upgrade, thus the calculations of the temperature variations in the fiber environment may be incorrect.

Therefore, an objective technical problem addressed by the invention is how to accurately and cost-effectively estimate the variations of the average environment temperature around the optical fiber infrastructure in a PON system, specifically for FTTx applications, without introducing additional hardware and overcoming the limitations of existing temperature monitoring solutions that rely on dedicated measurement equipment, which increase costs and measurement time, and can only measure temperature on a single fiber at a time.

**SUMMARY OF THE INVENTION**

The present invention is useful for solving the problems mentioned above, by means of a method and system for monitoring the environmental temperature in the coverage of fiber networks, without the need to use additional measurement hardware and using existing protocols, reducing the cost and the time required for measurement and to obtain temperature monitoring information from a big amount of fiber paths over other existing approaches. The present invention applies to Fiber to the Home (FTTH) technology, more specifically, to Passive Optical Network (PON) architecture.

As the PON infrastructure is built on a tree physical topology of each OLT connected to several ONUs through an optical splitter, a variation in the environmental temperature around the optical fiber causes a variation in the Round Trip Delay (RTD) between the OLT and each ONU in the PON system.

This invention provides a temperature monitoring method/system that estimates the variations of the average environment temperature around the optical fiber infrastructure in an FTTx (i.e., FTTH, FTTB, etc.) PON system, based on RTD between network equipment (OLT device) and customer devices: Customer Premises Equipment (CPE) and optical network unit (ONU). The proposed method/system uses the PON equipment without the need for additional hardware and using standard PON protocols.

The proposed method/system uses a calculation of temperature variations based on Round Trip Delay (RTD), which is applicable across multiple fiber network topologies, including both bus and star configurations. This general applicability ensures that the method is not limited to bus networks but can also be effectively implemented in star topologies, providing a versatile solution for monitoring and managing fiber optic networks in various configurations.

An aspect of the present invention refers to a method for monitoring temperature in a fiber optic network that comprises multiple customer devices (i.e., CPEs or ONUs) connected to an optical fiber link to communicate with an optical line termination (OLT) which comprises the following steps performed in the OLT:

- during time intervals scheduled by the OLT, measuring a round-trip delay (RTD) between each (first) customer device requiring synchronization with the (second) customer devices previously set in service and the OLT; and
- for each (first) customer device, estimating variations in the measured RTD to determine temperature variations ($\Delta T$) of the optical fiber link.

The customer devices can be an optical network unit (ONU), an optical network terminal (ONT), or an integrated device comprising ONU/ONT, or a network router using Wi-Fi (wireless) or Ethernet (wired) connections (Wi-Fi/Ethernet router).

Additionally, the method further comprises retrieving an average temperature of a monitored optical link of the fiber optic network, wherein the network is divided into segments (or sections) whose limits are defined by the (selected) customer devices of selected customers and the information from these selected customer devices is used to derive the average temperature of each segment iteratively. This iterative process is performed by retrieving the average temperature from the selected customer device which is closest to the OLT and then this information is used to calculate the average temperature from said customer device to a subsequent customer device further away from the OLT, this subsequent customer device sharing the monitored optical link with the previous customer device. By knowing the average temperature read by this subsequent device and subtracting the effect of the previous segment of the monitored link, the average temperature of the subsequent segment of the monitored link is estimated. Moreover, two-dimensional (2D) maps of temperature can be created by combining the information of average temperature retrieved from several customer devices to provide accurate spatial temperature distributions, allowing for detailed mapping of temperature gradients across the optical fiber network. This approach enhances the ability to monitor and manage thermal conditions in real-time, providing valuable insights for various applications.

Another aspect of the present invention refers to an OLT device of an FTTx system implementing the temperature monitoring method described above.

Another aspect of the present invention refers to an FTTx system comprising a computing device which is an optical line termination (OLT) or a remote computing equipment communicated with the OLT, the computing device implementing the temperature monitoring method described above.

Finally, in another aspect of the invention, a computer program is shown that comprises computer-executable instructions to implement the described method, when executed in a computer (or a digital signal processor, an application-specific integrated circuit, a microprocessor, a microcontroller, or any other form of programmable hardware). Said instructions may be stored on a digital data storage medium.

The proposed method is capable of gathering temperature monitoring data from a wide geographical area in the coverage of FTTH, FTTB... networks, without the need for additional sensors, just using the current PON protocols with minor software updates for the optical digital signal processor configuration of the OLT equipment. The gathered temperature data can be offered to network operators which are interested in gathering temperature monitoring date from their own FTTx networks and as a network Application Programming Interface (API) to third parties.

The invention is defined by the independent claims. The dependent claims define advantageous embodiments. For a more complete understanding of the invention, its objects and advantages, reference may be made to the following specification and accompanying drawings.

## BRIEF DESCRIPTION OF THE DRAWINGS

A series of drawings that help to better understand the invention and that are expressly related to an embodiment of said invention that is presented as a nonlimiting example of it are briefly described below.

FIGURE 1.- Shows a schematic block diagram of a FTTH fiber optic network.
FIGURE 2.- Shows an optical feeder network in bus topology divided into multiple segments between selected customer devices, according to a possible embodiment.

## DESCRIPTION OF EMBODIMENTS

Examples of embodiments of the invention are described below in detail, making reference when necessary to the figures cited above, without limiting or reducing the scope of protection of the present invention.

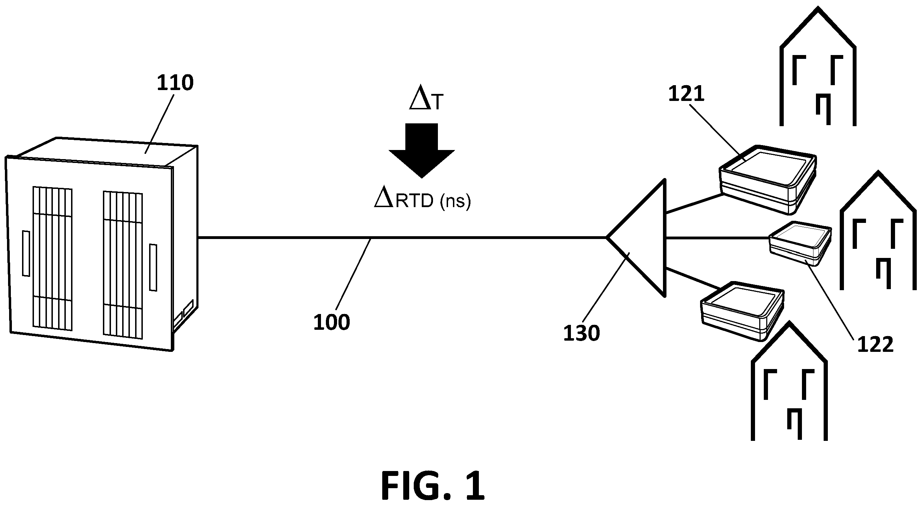

Figure 1 shows the branched topology of a PON system comprising one or more first customer devices (121), i.e., CPEs or ONUs, which are to be incorporated into the service provided by the PON system, and further comprising second customer devices (122), or CPEs/ONUs, which are already in service in the PON system. The plurality of first customer devices (121) and second customer devices (122) are connected into an optical fiber link (100) of the PON through an optical splitter (130) to the optical line termination (110) or OLT. The first customer devices (121), ONUs, need to get synchronized with the upstream frames before transmitting to the OLT (110), to avoid collision with the optical bursts of the other, second customer devices (122) already in service. The optical fiber link (100) between each ONU or customer device (121, 122) of the PON system and the OLT (110) has a different length, and this length is initially unknown during the first connection of an ONU to the PON. To synchronize the first customer devices (121) with the transmission bursts of the second customer devices (122) already in service, the round-trip delay (RTD) between each first customer device (121), the newly given ONU to be incorporated into the PON service, and the OLT (110) is measured by said OLT (110). Once the RTD between the given first customer device (121) and the OLT (110) is obtained by the OLT, the OLT (110) can instruct the first customer device (121), the newly incorporated ONU, to adjust the time of its transmission bursts.

The measurement of the RTD for the first customer devices (121) can only be done during specific time intervals, named quiet windows, scheduled periodically by the OLT (110) at its discretion. During the quiet window, the OLT (110) suppresses for a limited time all the transmission of the second customer devices (122), i.e., the ONUs in service, thus allowing the first customer devices (121) to send specific messages, yet not synchronized with the second customer devices (122), just for the sake of initial synchronization.

The measurement of the RTD between the OLT and each ONU is typically done each time a new ONU, i.e., first customer device (121), is connected to the PON and powered up for the first time, but also each time the first customer device (121) is rebooted electrically, either locally or remotely.

As disclosed in GPON ITU-T Standard G.984.3, the RTD between OLT and ONUs not only depends on the fiber propagation delay, but also from the ONU Response time. The OLT also instructs ONUs to include additional requisite delay and Start Time parameters, which are considered by ONUs before transmitting. The requisite delay is a general term that refers to the total extra delay that an ONU may be required to apply to the upstream transmission beyond its regular response time. The OLT determines the requisite delay specific for each specific ONU, so that all ONUs do not interfere with each other in the upstream direction.

For each first customer device (121) incorporated into the PON service, i.e., installed for the first time in the PON or electrically rebooted, the OLT (110) measures the RTD during the quiet window, as explained further below and from the different parameters involved. These parameters are defined as follows:

- Some parameters of the RTD, specified by GPON ITU-T Standard G.984.3, have some random nature and are not known by the OLT (110). They are:

  - Propagation delay. This depends on the fiber distance between the OLT and the ONU, and it is unknown during the first connection of the ONU to the PON.
  - ONU response time is $35 \pm 1$ $\mu$sec. This is the time needed for the ONU to process the SN request message (SN: Serial Number) and prepare the response to it. The OLT can obtain the value of the ONU response time by reading the ANI-G managed entity in each customer device using the OMCI protocol (ITU-T G.988).
  - Random delay is 0 to 48 $\mu$sec. For each response to a serial number request, the ONU generates a new random number and uses it as delay to answer the OLT. The value of the random delay is transmitted to the OLT within the SN Response message. This random delay is used to avoid collision between several new ONUs that may be connected to the PON and start the ranging process at the same time.

- Besides the random values, some parameters of the RTD, specified by GPON ITU-T Standard G.984.3, are controlled by the OLT (110) and they are:

- Pre-assigned delay. This value is controlled by the OLT and assigned using the PLOAM upstream overhead message during Serial Number acquisition.
- Start time. This refers to the relative position of the SN response message (SN: Serial Number) of the ONU, with regards to the start of the upstream frame in ONU's view (Start time = 0).

With all the former information as received by the OLT (110) in SN response message from the first customer device (121), the OLT (110) can adjust the transmission time of the first customer device (121), i.e., the ONU installed for the first time in the PON or electrically rebooted, so that the upstream burst from the first customer device (121) is received in the desired time. This adjustment is performed by OLT (110) using the parameter Equalization Delay (EqD) of the Ranging_Time PLOAM message.

The key point is to consider the random delay that the OLT (110) receives through a PLOAM message. For example, the EqD may vary when a device is restarted if the random delay changes, in order to maintain frame alignment; however, it will not vary due to temperature changes. On the other hand, as defined in Equation 0, the RTD does not vary upon a device restart, because the random delay is subtracted.

In the GPON protocol, the GTC layer (GTC: GPON Transmission Convergence) converts upper frames into a GTC frame and then transmits the frame. During operation, the ONU maintains its upstream GTC frame clock synchronized with the downstream GTC frame clock and offset by the sum of the ONU response time and the assigned equalization delay specified by the OLT (110) in the Ranging_Time message.

Regarding mechanisms for managing the EqD parameter in ITU- PON systems, according to the ITU-T GPON standard, alarms associated with the Drift of Window (DoW) and Transmission Interference Warning (TIW) are defined in order to inform the network operator about the deviation of the upstream frame of a specific ONU above a specific threshold of number of bits, as shown in Table 1.

**Table 1**

| Upstream interface rate [Gbit/s] | DOWi threshold [bits] | TIWi threshold [bits] |
|---|---|---|
| 2.488 | 8 | 16 |
| 1.244 | 4 | 8 |

Internally, the OLT (110) can calculate the variations of the RTD for each ONU and instruct to modify the EqD parameter accordingly using the Ranging_Time or Ranging_Adjustment PLOAM messages. The OLT (110) is configured to calculate a Round Trip Delay, $RTD_i$, for a customer device (121, 122), $ONU_i$, using the following equation:

$$RTD_i = Z_{EqD_i} - EqD_i - RD_i \quad \text{(Equation 0)}$$

where:

$Z_{EqD_i}$ is the Zero-distance Equalization Delay between the OLT and $ONU_i$
$EqD_i$ is the Equalization delay for $ONU_i$
$RD_i$ is the Random Delay used by $ONU_i$ during ranging.

The value of the RTD depends on the propagation delay of optical signals transmitted between the OLT and the ONU in both propagation directions, as follows:

$$RTD_i = FD_{down_i} + FD_{up_i} + RT_i \quad \text{(Equation 1)}$$

being:

$FD_{down_i}$ the fiber propagation delay between OLT and $ONU_i$
$FD_{up_i}$ the fibre propagation delay between $ONU_i$ and OLT
$RT_i$ the (constant) response time of the $ONU_i$ to answer the SN requests from OLT.

The OLT (110) can calculate and report the $RTD_i$ at any time, periodically or by demand, and at each state of the ONU or customer device (121, 122). The OLT (110) considers the related parameters to do this calculation, such as the ONU random delay or the pre-assigned delay value, if used.

The ONU's upstream transmission is expected to arrive in a fixed time during the upstream GTC frame. The arrival phase of the ONU transmission may drift due to aging, temperature changes and other factors. In those cases, the equalization delay can be recalculated/updated from the drift of the upstream transmission. This allows small corrections to be made without having to re-range the ONU. In GPON systems, the accuracy of the EqD in the 1.244 Gbit/s G-PON network is $\pm 4$ bits, which is approximately $\pm 3$ ns.

The Ranging_adjustment PLOAM message can also be used by the OLT (110) to instruct a modification in the Equalization delay, EqD.

Variations of the environmental temperature in a fiber between an optical line termination and an optical network unit cause a variation of the RTD, as shown in Figure 1 (temperature variations are denoted as $\Delta T$ and $\Delta RTD$ denotes RTD variations), and this can be detected by the OLT (110) when the upstream transmission bursts start to deviate from the assigned time slots assigned during the ranging process. The opposite RTD variation to compensate the environmental temperature change is internally estimated by the OLT (110) so that the deviation of the transmission burst of the i-th customer device (121, 122) of the PON system, ONU_i, from the assigned time slots is avoided. The calculation of the environmental temperature variations from the RTD is done as follows:

By the derivation of Equation 1, it is obtained:

$$\Delta RTD_i = L_i \cdot \left[ \frac{(n_{up} + n_{down})}{c} \right] \cdot \frac{dn}{dT_i} \cdot \Delta T_i \qquad \text{(Equation 2)}$$

where

- $\Delta RTD_i$ is the $RTD_i$ variation calculated by the OLT (110) in order to re-allocate properly the $ONU_i$ transmission busts to the assigned time slots in the upstream frame. The delay $RTD_i$ is measured in bits.

- $L_i$ is the fiber distance between the OLT (110) and the i-th customer device (121, 122), $ONU_i$.

- $c$ is the speed of light in vacuum

- $n_{up}$ is the effective propagation index in the optical signal transmitted from the $ONU_i$ to the OLT (110)

- $n_{down}$ is the effective propagation index in the optical signal transmitted from the OLT (110) to the $ONU_i$

- $\frac{dn}{dT_i}$ is the average linear thermo-optic coefficient of the fiber path between the OLT (110) and the $ONU_i$

- $\Delta T_i$ is the average temperature variation along the optical path between the OLT (110) and $ONU_i$

Finally, it is possible to estimate temperature variations ($\Delta T_i$) from known physical parameters of the fiber and from the calculated $\Delta RTD_i$ as follows:

$$\Delta T_i = \Delta RTD_i \cdot c / \left[ L_i \cdot \left( n_{up} + n_{down} \right) \cdot \frac{dn}{dT_i} \right] \qquad \text{(Equation 3)}$$

Typically, $RTD$ is computed in units of bits of the upstream frame from ONUs to OLTs, thus it can be translated into time units as follows:

$$\Delta RTD \text{ (in time units)} = \Delta RTD \text{ (in bits)} \times T_{up} / N_{up} \qquad \text{(Equation 4)}$$

where $T_{up}$ is the time duration of the upstream frame and $N_{up}$ is the number of bits of the upstream frame

The same equations may be derived with minimum changes for use in IEEE PON and other Next Generation PON systems.

The above described calculations of the round-trip-delay and temperature variations (equation 1 and equations 2-3) can be performed by the OLT itself or any other remote computing system communicated with the optical line termination (110).

In another embodiment, the method described above can be applied to FTTH technology using Point-to-Point (PtP) architecture.

In another embodiment, the system using the calculation method described above is capable of gathering the environmental temperature monitoring information from a big number of devices in an FTTH (PON or PtP fiber network) by using a management system communicated with all the OLTs or through network equipment using the fiber infrastructure under monitoring.

In another embodiment, the system can implement the above-described calculation method before without requiring OLT information, but just using local device information, the distance of each device to the OLT and the RTD variations assigned to each device via PLOAM messages, and delivering this information to a centralized remote data processing system using available protocols and/or data communication means in the same fiber or another communication service available in the customer device.

In a further possible embodiment, the aforementioned calculation method can be applied to point to point fiber systems capable of measuring the RTD between network operator equipment and customer premises equipment.

Furthermore, improved temperature monitoring results can be obtained by a system using real values of the linear thermo-optic coefficient and effective refractive index in the optical wavelengths used in each segment of the fiber path between network operator equipment and customer premises equipment, using information from inventory systems and/or measurements in the real fiber network.

Furthermore, improved temperature monitoring results can be obtained by a system combining (by ponderation and/or averaging) the RTD calculations of several customer premises equipment, using the same or different PON or PtP transmission technologies, sharing mostly the same or part of the PON or a PtP fiber path, in order to monitor the environmental temperature in the common fiber path of the network infrastructure.

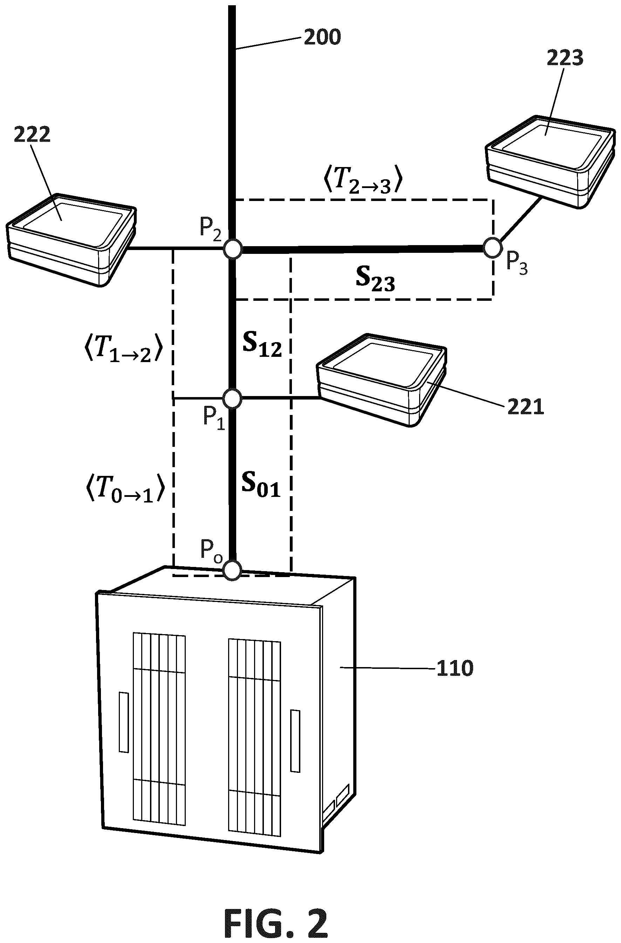

In a further possible embodiment, the method for temperature monitoring can use RTD calculations obtained from several customer premises equipment and combine them to build 2D temperature maps. Figure 2 shows how an optical feeder network, arranged in a bus topology, is divided into a plurality of segments ($S_1$, $S_2$, $S_{3,...}$), defined between selected customer premises equipment (i.e., customer devices of selected customers). The average temperature calculations from each RTD are combined to derive the average temperature of each segment and thus create a 2D temperature map following the next method. As seen in Figure 2, the average temperature from the OLT (110) connected at a root point ($P_0$) through a monitored optical link (200) to an initial customer device (221), which is the customer device -connected- closest to the OLT (110) -in Figure 2, the initial customer device (221) is the one connected to the initial point ($P_1$), depends only on the environmental temperature of the initial segment ($S_{01}$), which has a length $L_{0 \to 1}$, and the variation in the average temperature along the initial segment ($S_1$) is given by:

$$\langle \Delta T_{0 \to 1} \rangle = \frac{1}{L_{0 \to 1}} \int_0^{L_{0 \to 1}} T(z) dz \qquad \text{(Equation 5)}$$

where $T(z)$ is the spatial evolution of environmental temperature along the monitored link (200) and $\Delta T_{0 \to 1}$ is the variation of the average temperature of the initial segment ($S_{01}$)

The average temperature in a subsequent segment ($S_{12}$) with length $L_{1 \to 2}$ can be calculated from the value of the previous segment. The variation in the average temperature from the root point ($P_0$) to the next point ($P_2$), which are the ends of the subsequent segment ($S_{12}$) as shown in Figure 2, can be expressed as:

$$\langle \Delta T_{0 \to 2} \rangle = \frac{1}{L_{0 \to 2}} \int_0^{L_{0 \to 2}} T(z) dz = \frac{\langle \Delta T_{0 \to 1} \rangle \cdot L_{0 \to 1} + \langle \Delta T_{1 \to 2} \rangle \cdot L_{1 \to 2}}{L_{0 \to 2}} \qquad \text{(Equation 6)}$$

Knowing $\langle \Delta T_{0 \to 1} \rangle$ from the previous step and assuming both measurements are carried out close enough in time, it is possible to infer $\langle \Delta T_{1 \to 2} \rangle$ from the EqD variation measured at the next point ($P_2$) of connection. $\langle \Delta T_{1 \to 2} \rangle$ denotes the variation in the average temperature from the initial point ($P_1$) to the next point ($P_2$). This procedure can be executed iteratively to estimate the average temperature variation for each segment($S_{01}$, $S_{12}$, $S_{23,...}$) into which a monitored fibre link (200) is split, , as shown in Equation 7,

$$\begin{pmatrix} 1 & 0 & \cdots & 0 \\ \frac{L_{0 \to 1}}{L_{0 \to 1} + L_{1 \to 2}} & \frac{L_{1 \to 2}}{L_{0 \to 1} + L_{1 \to 2}} & \cdots & 0 \\ \vdots & \vdots & \vdots & \vdots \\ \frac{L_{0 \to 1}}{\sum L_{k-1 \to k}} & \frac{L_{1 \to 2}}{\sum L_{k-1 \to k}} & \cdots & \frac{L_{n-1 \to n}}{\sum L_{k-1 \to k}} \end{pmatrix} \begin{pmatrix} \langle \Delta T_{0 \to 1} \rangle \\ \langle \Delta T_{1 \to 2} \rangle \\ \vdots \\ \langle \Delta T_{n-1 \to n} \rangle \end{pmatrix} = \begin{pmatrix} \langle \Delta T_{0 \to 1} \rangle \\ \langle \Delta T_{0 \to 2} \rangle \\ \vdots \\ \langle \Delta T_{0 \to n} \rangle \end{pmatrix} \qquad \text{(Equation 7)}$$

where $\langle \Delta T_{i \to j} \rangle$ represents the variation of average temperature of the segment $S_{ij}$ between connection points $Pi$ and $Pj$ of the link.

This method for calculating the intermediate temperature variations based on the known average temperature variations between points ($P_0$, $P_1$, $P_2$, $P_{3,...}$) separated in series along the monitored link (200) provides points of temperature along the fiber tree and the information of several trees can be represented together to build a 2D map of an area.

Furthermore, improved temperature monitoring results can be obtained by a system using a customer premises equipment co-located with the network operator equipment, using a return fiber sharing in the same fiber path of the PON or PtP fiber network, thus increasing the fiber length used for environmental temperature monitoring. More particularly, the customer premises equipment in the network premises can be used as a measurement probe without service to customers, thus allowing for implementations of the measurement technique that may cause data transmission interruption, for example forcing ONU re-ranging by remote device electrical rebooting.

In this text, the word "comprise" and its variants (such as "comprising", etc.) should not be interpreted in an exclusive way, that is, they do not exclude the possibility that what is described includes other elements, steps, etc. Also, in the claims, the expression "that comprises/comprising" does not exclude other elements or steps, and the indefinite article "a" or "an" does not exclude a plurality. No reference symbols in the claims should be construed as limiting the scope.

The aspects defined in this detailed description are provided to aid in a thorough understanding of the invention. Accordingly, those skilled in the art will recognize that variations, changes, and modifications may be made to the embodiments described herein without departing from the scope of the invention. Also, the description of well-known functions and elements are omitted for the sake of clarity and conciseness.

**Claims**

1. A method for monitoring temperature in a fiber optic network comprising a plurality of first customer devices (121) and second customer devices (122), both first and second customer device (121, 122) configured to be connected to an optical fiber link (100) to communicate with an optical line termination (110), wherein the first customer devices (121) require synchronization with the second customer devices (122) previously set in service and connected to the optical fiber link (100), wherein the method comprises the following steps, performed by the optical line termination (110):

   - measuring a round-trip delay (RTD) between each first customer device (121) and the optical line termination (110) during time intervals scheduled by the optical line termination (110),
   - estimating variations in the measured round-trip delay (RTD) for each customer device (121, 122) to determine temperature variations ($\Delta$T) of the optical fiber link (100).

2. The method according to claim 1, wherein determining temperature variations ($\Delta$T) from the variations in the measured round-trip delay (RTD) is performed by computing:

$$\Delta T_i = \Delta RTD_i \cdot c \Big/ \left[ L_i \cdot \left( n_{up} + n_{down} \right) \cdot \frac{dn}{dT_i} \right]$$

   where

   $\Delta RTD_i$ is a variation in the round-trip delay, $RTD_i$, estimated for an i-th customer device (121, 122) of the fiber optic network which is a passive optical network,
   $L_i$ is a fiber distance between the optical line termination (110) and the i-th customer device (121, 122),
   $c$ is the speed of light in vacuum,
   $n_{up}$ is an effective propagation index in an optical signal transmitted from the i-th customer device (121, 122) to the optical line termination (110),
   $n_{down}$ an effective propagation index in an optical signal transmitted from the optical line termination (110) to the i-th customer device (121, 122),

   $\frac{dn}{dT_i}$ is an average linear thermo-optic coefficient of an optical fiber path between the optical line termination (110) and the i-th customer device (121, 122).

3. The method according to claim 2, wherein the round-trip delay for the i-th customer device (121, 122), $RTD_i$, is estimated by the optical line termination (110) using the equation:

$$RTD_i = Z_{EqD_i} - EqD_i - RD_i$$

where:

$Z_{EqD_i}$ is a zero-distance equalization delay between the optical line termination (110) and the i-th customer device (121, 122),
$EqD_i$ is an equalization delay for the i-th customer device (121, 122)
$RD_i$ is a random delay used by the i-th customer device (121, 122) during ranging.

4. The method according to any of the preceding claims, wherein measuring the round-trip delay (RTD) is performed when the first customer device (121) is connected to the optical fiber link (100) or electrically rebooted, and during the time intervals scheduled by the optical line termination (110).

5. The method according to any of the preceding claims, wherein the synchronization of the first customer devices (121) with the second customer devices (122) in service in the fiber optic network comprises suppressing transmission from the second customer devices (122) during the time intervals scheduled by the optical line termination (110) for measuring the round-trip delay (RTD), transmitting from the first customer devices (121) initial synchronization messages and synchronizing the first customer devices (121) with upstream frames before transmitting to the optical line termination (110) by adjusting the transmission time of the first customer devices (121) using the estimated variations in the measured round-trip delay (RTD).

6. The method, according to any of the preceding claims, further comprising a step of retrieving a variation of average temperature along a monitored optical link (200), wherein the step of retrieving the variation of average temperature comprising:

- dividing the monitored optical link (200) into a plurality of segments ($S_{01}$, $S_{12}$, $S_{23,...}$) whose lengths are determined by the points ($P_0$, $P_1$, $P_2$, $P_{3,...}$) at which a group of customer devices (221, 222, 223) of selected customers of the fiber optic network are connected,
- calculating the variation of average temperature for each segment ($S_{01}$, $S_{12}$, $S_{23,...}$) iteratively, starting from an initial segment ($S_{01}$) defined between the OLT (110) and an initial customer device (221), and progressing through subsequent segments ($S_{12}$, $S_{23,...}$) defined between subsequent customer devices (222, 223) along the monitored optical link (200), wherein
- the variation of average temperature of the initial segment ($S_{01}$) is given by:

$$\langle \Delta T_{0\to1} \rangle = \frac{1}{L_{0\to1}} \int_0^{L_{0\to1}} T(z)dz$$

where $T(z)$ is a spatial evolution of environmental temperature along the monitored link (200) and $\Delta T_{0\to1}$ is the variation of the average temperature of the initial segment ($S_{01}$); and
- the variation of average temperature of the subsequent segments ($S_{12}$, $S_{23,...}$) is calculated based on the variation of average temperature calculated for a previous segment.

7. The method, according to claim 6, wherein the variation of average temperature of the subsequent segments ($S_{12}$, $S_{23,...}$) is calculated by computing

$$\begin{pmatrix} 1 & 0 & \cdots & 0 \\ \dfrac{L_{0\to1}}{L_{0\to1}+L_{1\to2}} & \dfrac{L_{1\to2}}{L_{0\to1}+L_{1\to2}} & \cdots & 0 \\ \vdots & \vdots & \vdots & \vdots \\ \dfrac{L_{0\to1}}{\sum L_{k-1\to k}} & \dfrac{L_{1\to2}}{\sum L_{k-1\to k}} & \cdots & \dfrac{L_{n-1\to n}}{\sum L_{k-1\to k}} \end{pmatrix} \begin{pmatrix} \langle \Delta T_{0\to1} \rangle \\ \langle \Delta T_{1\to2} \rangle \\ \vdots \\ \langle \Delta T_{n-1\to n} \rangle \end{pmatrix} = \begin{pmatrix} \langle \Delta T_{0\to1} \rangle \\ \langle \Delta T_{0\to2} \rangle \\ \vdots \\ \langle \Delta T_{0\to n} \rangle \end{pmatrix}$$

where $\langle \Delta T_{i\to j} \rangle$ denotes a variation of average temperature of a segment $S_{ij}$ between points $Pi$ and $Pj$ of the monitored optical link (200).

8. An optical line termination (110) device comprising an optical digital signal processor configured to perform the method according to any of claims 1-7.

9. A system for monitoring temperature in a fiber optic network comprising:

an optical line termination (110),
a plurality of first customer devices (121) and second customer devices (122), both first and second customer device (121, 122) configured to be connected to the optical line termination (110) through an optical fiber link (100), wherein the first customer devices (121) require synchronization with the second customer devices (122) previously set in service and connected to the optical fiber link (100),
wherein the optical line termination (110) is configured to:

- measure a round-trip delay (RTD) between each first customer device (121) and the optical line termination (110) during time intervals scheduled by the optical line termination (110),
- estimate variations in the measured round-trip delay (RTD) for each customer device (121, 122) to determine temperature variations ($\Delta T$) of the optical fiber link (100).

10. The system according to claim 9, wherein the optical line termination (110) or a remote computing equipment communicated with the optical line termination (110) is configured to determine temperature variations ($\Delta T$) from the variations in the measured round-trip delay *(RTD)* by computing:

$$\Delta T_i = \Delta RTD_i \cdot c \Big/ \left[ L_i \cdot \left( n_{up} + n_{down} \right) \cdot \frac{dn}{dT_i} \right]$$

where

$\Delta RTD_i$ is a variation in the round-trip delay, RTD_i, estimated for an i-th customer device (121, 122) of the fiber optic network which is a passive optical network,
$L_i$ is a fiber distance between the optical line termination (110) and the i-th customer device (121, 122),
$c$ is the speed of light in vacuum,
$n_{up}$ is an effective propagation index in an optical signal transmitted from the i-th customer device (121, 122) to the optical line termination (110),
$n_{down}$ an effective propagation index in an optical signal transmitted from the optical line termination (110) to the i-th customer device (121, 122),
$\frac{dn}{dT_i}$ is an average linear thermo-optic coefficient of an optical fiber path between the optical line termination (110) and the i-th customer device (121, 122).

11. The system according to claim 10, wherein the optical line termination (110) or the remote computing equipment communicated with the optical line termination (110) is configured to estimate the round-trip delay, $RTD_i$, by computing:

$$RTD_i = Z_{EqD_i} - EqD_i - RD_i$$

where:

$Z_{EqD_i}$ is a zero-distance equalization delay between the optical line termination (110) and the i-th customer device (121, 122),
$EqD_i$ is an equalization delay for the i-th customer device (121, 122) $RD_i$ is a random delay used by the i-th customer device (121, 122) during ranging.

12. The system according to any of claims 10-11, wherein the optical line termination (110) is configured to measure the round-trip delay (RTD) when the first customer device (121) is connected to the optical fiber link (100) or electrically rebooted, and during the time intervals scheduled by the optical line termination (110).

13. The system according to any of claims 10-12, wherein the fiber optic network is a passive optical network, PON.

14. The system according to any of claims 10-12, wherein the fiber optic network is point-to-point, PtP.

**15.** A computer program comprising computer executable instructions for implementing the method according to any of claims 1-7, when executed on a computer, a microprocessor, a microcontroller or any other form of programmable hardware.

**FIG. 1**

**FIG. 2**

# EUROPEAN SEARCH REPORT

**Application Number**

EP 24 38 3222

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | US 11 644 369 B2 (NEC LAB AMERICA INC [US]; NEC CORP [JP]) 9 May 2023 (2023-05-09) * abstract * * the whole document * ----- | 1-15 | INV. G01K11/32 G01D5/353 |
| A | CN 114 427 922 A (NANGJIANG COLLEGE; CHINESE PEOPLE LIBERATION NAVY ENGINEERING UNIV) 3 May 2022 (2022-05-03) * abstract * * the whole document * ----- | 1-15 | |

**TECHNICAL FIELDS SEARCHED (IPC)**

G01K
G01D

The present search report has been drawn up for all claims

| Place of search | Date of completion of the search | Examiner |
|---|---|---|
| The Hague | 10 April 2025 | Bagnera, Carlo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                         

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 38 3222

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2025

| Patent document cited in search report | | Publication date | Patent family member(s) | | Publication date |
|---|---|---|---|---|---|
| US 11644369 | B2 | 09-05-2023 | US | 2020370970 A1 | 26-11-2020 |
| | | | WO | 2020236867 A1 | 26-11-2020 |
| CN 114427922 | A | 03-05-2022 | NONE | | |

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 8858069 B2

• US 11644369 B2

**Non-patent literature cited in the description**

• **CRISTIAN SALGADO-CAZORLA ; BORJA VIDAL**. Towards Costless Temperature Monitoring through PLOAM Information in TDMA PON Networks. *Optical Fiber Communications Conference and Exhibition (OFC) 2023, 5-9 March 2023*